# EUROPÄISCHE PATENTSCHRIFT

(11) **EP 0 699 300 B1**
(45) Veröffentlichungstag und Bekanntmachung des Hinweises auf die Patenterteilung: **09.01.2002**
(21) Anmeldenummer: 95909686.8
(22) Anmeldetag: 08.02.1995
(51) Int. Cl.: G01N 21/73

(54) **PLASMA MANIPULATOR**
PLASMA MANIPULATOR
MANIPULATEUR A PLASMA

(30) Priorität: 18.03.1994 DE 4409237; 03.06.1994 DE 4419423
(43) Veröffentlichungstag der Anmeldung: 06.03.1996
(73) Patentinhaber: SPECTRO ANALYTICAL INSTRUMENTS Gesellschaft für analytische Messgeräte mbH, D-47533 Kleve (DE)
(72) Erfinder: FALK, Heinz, D-47533 Kleve (DE)
(74) Vertreter: Lenzing, Andreas, Dr.
(86) Internationale Anmeldenummer: EP9500447
(87) Internationale Veröffentlichungsnummer: WO9525951

(56) Entgegenhaltungen:
- EP-A- 0 051 152
- US-A- 4 902 099

## Beschreibung

Die Erfindung betrifft eine Vorrichtung zur Formierung der Beobachtungszone eines Plasmabereiches für die optische Emissionsspektralananlyse.

Die Vorrichtung zur Plasmaformierung soll denjenigen Bereich aus einem eine Analysenprobe enthaltenden nicht-stromführenden Plasma aussondern, welcher bei möglichst hohem analytischen Emissionssignal zugleich niedrige Intensitäten der spektralen Untergrundstrahlung gewährleistet. Darüberhinaus sollen die Emissionssignale gegen Schwankungen stabilisiert werden und die Umgebungsluft vom Lichtweg zwischen Beobachtungszone des Plasmas und dem verwendeten Spektrometer ferngehalten werden.

Verschiedene Typen von Plasmastrahlungsquellen für die Anwendung in der Emissionsanalyse sind bekannt. Dabei wird eine Analysenprobe zumeist als Aerosol mit Hilfe eines Trägergases in das Plasma eingebracht, dort verdampft, dissoziiert, teilweise ionisiert und die freien Atome und Ionen zur optischen Emission angeregt. Die Messung der emittierten Strahlung erfolgt gewöhnlich in einem nicht-stromführenden Bereich des Plasmas, um Einflüsse der Probenmatrix möglichst gering zu halten. Beispiele für derartige Strahlungsquellen sind der scheibenstabilisierte Bogen, das induktiv gekoppelte Plasma (ICP) und das mikrowellenangeregte Plasma.

Die analytische Leistungsfähigkeit der oben beschriebenden Emissionsstrahlungsquellen nimmt mit dem Signal-zu-Rausch-Verhältnis (S/N), dem Quotienten aus der spektralen Linien-Intensität der nachzuweisenden Spezies und der in dem betreffenden Spektralintervall auftretenden Emission des spektralen Untergrundes zu. Durch eine Vielzahl von Untersuchungen ist bekannt, daß S/N stark von der Art der optischen Beobachtung abhängt. Zum Beispiel findet man beim ICP bei Beobachtung senkrecht zur Plasmaachse einen vom betrachteten Analyseelement abhängigen Abstand von der Anregungsspule, bei dem S/N maximal wird (P.W.J.M. Boumans, Ed., Inductively Coupled Plasma Spectroscopy, John Wiley & Sons, New York, 1987). Erfolgt die Beobachtung beim ICP in Richtung der Plasmaachse (end-on), so wird maximales S/N im Zentrum des Plasmas erreicht, wobei auf eine angepaßte Ausblendung der äußeren heißeren Plasmazonen mit einem Radius von ca. 2 mm zu achten ist (D.R. Demers, "Evaluation of the axially viewed (end-on) Inductively Coupled Argon Plasma Source for Atomic Emission Spectroscopy", Appl. Spectroscopy 33, 584 (1979)).

Die US 4,902,099 zeigt ein Plasmaspektrometer zur Spurenelementanalyse mit einer Plasmafackel, die durch Mikrowellenenergie gespeist wird. Die Plasmafackel wird durch einen Gasstrom aus dem Bereich der Anregung herausgeleitet und außerhalb des Anregungsbereichs mit einem Spektrometer betrachtet.

Aus der EP 0051152 ist ein Plasmaemissionsspektrometer bekannt, bei dem der optische Pfad zwischen der Plasmafackel und dem Spektrometer durch einen Hohlkörper führt, der mit einem sauerstoffreien Gas gefüllt oder gespült werden kann. Auf diese Weise wird die Absorption von kurzwelligem UV-Licht im optischen Pfad verringert.

Bei den bisher verwendeten Beobachtungsarten für nicht-stromführende Plasmen wird stets nur ein bestimmter Anteil der störenden Untergrundstrahlung ausgeblendet. Die spektral kontinuierliche Untergrundstrahlung rührt überwiegend von der Wechselwirkung zwischen Ionen und Elektronen des Plasmas her. Zusätzlich trägt die Emission von Molekülen zur Erhöhung des Untergrundes bei. Die Intensitäten beider Typen der Untergrundstrahlung nehmen mit der Plasmatemperatur stärker zu als die gewünschte Lichtintensität. Die optimalen Temperaturen für verschiedene für die Analyse benutzte Emissionslinien von Atomen und Ionen unterscheiden sich erheblich. Sowohl bei der Beobachtung des Plasmas senkrecht als auch parallel zur Achse des Plasmas werden Zonen mit verschiedenen Temperaturen erfaßt. Diese Tatsache begrenzt das erzielbare S/N.

Aufgabe der Erfindung ist es, nicht-stromführende Plasmen derart zu manipulieren, daß die Untergrundstrahlung reduziert und das Signal-zu-Rauschverhältnis der analytischen Messung erhöht wird.

Die Aufgabe wird erfindungsgemäß dadurch gelöst, daß der für die Emissionsmessung optimale Teilbereich des Plasmas augeblendet wird, die Beobachtung in einem weitgehend von Umgebungseinflüssen abgeschirmten Volumenbereich erfolgt und die Plasmazusammensetzung zusätzlich durch Anlegen elektrischer oder magnetischer Felder optimiert werden kann. Die Erfindung führt zu einer wesentlichen Verbesserung des Nachweisvermögens des Analysenverfahrens.

Hierbei wird auf der Achse des Plasmas in Strömungsrichtung zentrisch eine gekühlte Blende angebracht, welche den für die Emissionsmessungen optimalen zentralen Teil des Plasmas insbesondere nur den optischen Teil hindurchläßt. In Strömungsrichtung hinter dem Plasma befindet sich eine Kammer, welche die Beobachtung des ausgesonderten Plasmabereiches senkrecht zu seiner Achse oder in Achsrichtung zuläßt. Der Weg zwischen dem Plasmabereich und der Meßeinrichtung wird zur Gewährleistung der optischen Transmission mit einem geeigneten Gas, vorzugsweise dem Trägergas des Plasmas, gespült. Gekühlte Blende, Beobachtungskammer und Anschlußvorrichtung zum Spektrometer bilden einen Plasma-Manipulator. Durch ein an die Eintrittsblende angelegtes elektrisches Potential relativ zum Plasmapotential wird durch den Einfluß auf die Elektronen- und Ionenkonzentration eine Optimierung von S/N erreicht. Innerhalb des Manipulators angebrachte Elektroden oder magnetischer Polschuhe ermöglichen die Erzeugung elektrischer oder magnetischer Felder vor oder innerhalb der Beobachtungszone, was über die Veränderung der Ladungsträgerkonzentration im Plasma ebenfalls zur Optimierung von S/N angewandt werden kann. Wird an den Manipulator und/oder die in seinem Innern befindlichen Elektroden Wechselspannung angelegt, werden Linien- und Untergrundintensität im Rhythmus dieser Wechselspannung moduliert. Die phasenabhängige Auswertung der dann modulierten Signale ermöglicht eine Unterscheidung zwischen Nutz- und Störsignalen und damit die Optimierung von S/N.

Zur Erhöhung der Geschwindigkeit des durch die gekühlte Blende des Plasma-Manipulators hindurchtretenden Plasmastrahls kann es zweckmäßig sein, in Strömungsrichtung hinter der Beobachtungszone einen Unterdruck zu erzeugen. Die dadurch erreichte Erhöhung der Strömungsgeschwindigkeit des ausgeblendeten Plasmastrahls vermindert den Temperaturabfall in Ausbreitungsrichtung im Beobachtungsvolumen. Zur Erzeugung des Unterdrucks wird vorteilhaft eine Pumpe verwendet, wobei die Druckseite der Pumpe in das Analyse-Plasma zurückgeführt wird, insbesondere in den Kühlgasstrom, um eine bessere Ausnutzung des Analyse-Plasmas zu erzielen.

Die konkrete Ausgestaltung der erfindungsgemäßen Vorrichtung und die Wahl der Betriebsparameter, wie Plasmaleistung, Gasdurchsätze, Abstand zwischen Plasmaerzeugungsvorrichtung und Plasma-Manipulator einschließlich der gewählten elektrischen Potentiale hängen von den zu analysierenden Proben einerseits und den erforderlichen Nachweisgrenzen andererseits ab. Dabei kann die Plasmaachse sowohl senkrecht als auch horizontal angeordnet sein.

Vorteilhafte Ausgestaltungen der Erfindung sind in den Unteransprüchen aufgeführt.

Für ein hohes Signal zu Rauschverhältnis kann es beispielsweise vorteilhaft sein, bei bestimmten Anwendungsfällen mit der Beobachtungseinrichtung das Plasma unter einem Winkel von 10 bis 170 Grad, vorzugsweise zwischen 45 und 135 Grad gegen die Ausbreitungsachse zu beobachten. In anderen Anwendungsfällen kann es erforderlich sein, die Beobachtungseinrichtung in Ausbreitungsrichtung des Plasmas anzuordnen und somit eine sogenannte end-on-Beobachtungsposition zu wählen. Dabei kann beispielsweise auch die Konusbohrung der gekühlten Blende auf eine Zwischenblende abgebildet werden.

Zwischen dem Plasmaerzeuger, insbesondere einem ICP-Brennerrohr und der Blende des Plasmamanipulators kann eine Spannung angelegt werden. Hiermit kann entweder das Plasma selbst elektrisch moduliert werden, oder es kann ein elektrisches Potential, das sich zwischen dem Plasmaerzeuger und dem Plasmamanipulator aufbaut, kompensiert werden.

Geometrisch günstige Verhältnisse ergeben sich, wenn am Plasmamanipulator eine Eintrittsblende mit einer ihrem Durchmesser vergleichbaren Dicke vorhanden ist und das Beobachtungsvolumen einen größeren Durchmesser als die Blende besitzt.

Wenn zwischen der Eintrittsblende und dem Beobachtungsvolumen, insbesondere im Bereich des Beobachtungsvolumens Elektroden oder Polschuhe als ein Mittel zum Erzeugen eines elektrischen und/oder eines magnetischen Feldes angeordnet sind, besonders eine Spule in dem an den ausgebildeten Plasmastrahl angrenzenden Raumbereich vorhanden ist, kann das Plasma im Beobachtungsvolumen elektrisch oder magnetisch formiert werden. Dabei können die Elektroden mit einer Wechselspannung beaufschlagt werden, wobei der Signalnachweis im Spektrometer mit dieser Wechselspannung synchronisiert wird und dadurch auf an sich bekannte Weise das Signal zu Rauschverhältnis verbessert wird. Dabei wird die Modulation des Plasmas so gewählt, daß der für die betrachtete Emission signifikante Teil des Signals mit der Modulation verändert wird, während der Untergrund weitgehend konstant bleibt. Anhand des konstanten Anteils der Emission kann daraufhin eine Untergrundkorrektur des erhaltenen Signals durchgeführt werden.

Der Plasmamanipulator kann am Austrittsort des zentralen Plasmastrahls eine Blende mit einem Rohrstutzen zum Anschluß einer Pumpe aufweisen, so daß Trägergase des Plasmas oder Spülgase des Plasmamanipulators abgesaugt und wieder verwendet werden können. Dabei ist es vorteilhaft, wenn das ICP-Brennerrohr besonders nah an den Plasmamanipulator herangeführt wird, so daß das Spülgas oder das Trägergas möglichst wenig mit der umgebenden Atmosphäre in Berührung kommt. In einer extremen Ausgestaltung dieses Konstruktionsprinzips kann das ICP-Brennerrohr (auch Torchrohr) direkt mit dem Plasmamanipulator in Verbindung stehen, beispielsweise an diesen angeschweißt oder angeschraubt sein, so daß das beobachtete Plasma und das Spülgas überhaupt nicht mit der Außenluft in Kontakt kommen können. Die Absaugung wird dann vorteilhaft über einen im Plasmamanipulator angeordneten Ringspalt vorgenommen.

Die Manipulation der zu beobachtenden Plasmafackel kann auch dadurch vorgenommen werden, daß ein Inertgasstrom koaxial zu der Plasmafackel und entgegengesetzt zu deren Strömungsrichtung aus dem Plasmamanipulator austritt und so die tatsächlich lichtemittierende Länge der Plasmafackel reduziert wird. Es kann auf diese Weise erreicht werden, daß die Plasmafackel in dem Bereich, in dem sie auf das Spülgas trifft, trichterförmig auseinandergeführt wird und der Temperaturgradient in diesem Bereich besonders groß wird. Dies hat zur Folge, daß bei der Messung von Elementen wie z. B. Cadmium nur ein ganz bestimmter, kurzer Bereich der Plasmafackel die zur UV-Emission erforderliche Temperatur aufweist und unmittelbar dahinter (in Ausbreitungsrichtung des Plasmas) ein kalter Bereich folgt, der im wesentlichen kein störendes UV-Licht emittieren kann. Durch den Fluß des im Gegenstrom eingespeisten Gases kann somit die Länge der beobachteten Plasmafackel eingestellt werden und der UV-emittierende Bereich elementspezifisch gewählt werden. Eine kurze Plasmafackel würde für Elemente mit hoher Anregungsenergie bevorzugt werden, während eine lange Plasmafackel für Elemente niedriger Anregungsenergie optimal ist.

Ausführungsbeispiele der Erfindung sind nachfolgend dargestellt und näher erläutert.

Es zeigen:
- Figur 1:: ein erstes Ausführungsbeispiel;
- Figur 2:: ein zweites Ausführungsbeispiel; und
- Figur 3:: ein drittes Ausführungsbeispiel;
- Figur 4:: ein Ausführungsbeispiel mit nahezu vollständig abgeschirmter Plasmafackel.

Die Beispiele benutzen durchweg das ICP als Plasmaquelle, lassen sich jedoch grundsätzlich analog auf andere Anregungsquellen übertragen.

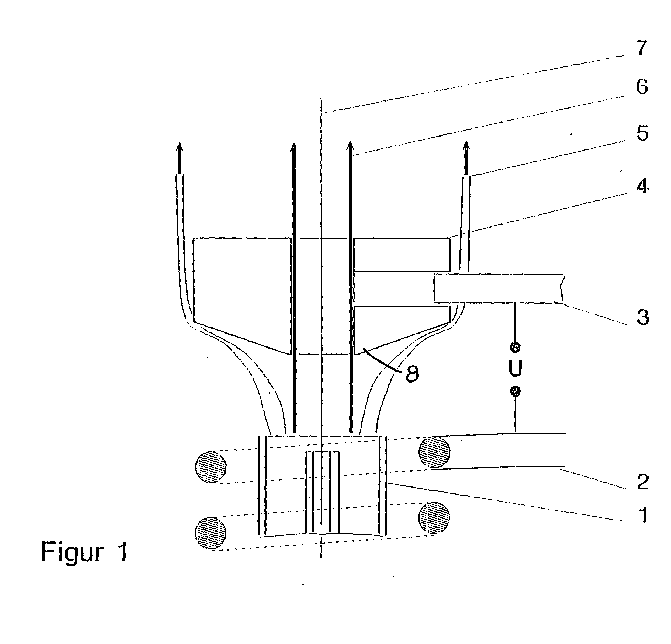

In Figur 1 ist ein erstes Ausführungsbeispiel einer einfachen Variante der erfindungsgemäßen Vorrichtung dargestellt. Figur 1 wird nachfolgend erläutert:

Das ICP-Brennerrohr 1 mit dem konzentrischen inneren Aerosolzuführungsrohr ist von der Hochfrequenz-Anregungsspule 2 umgeben. Cirka 5 bis 10 mm oberhalb der Anregungsspule befindet sich der axial angeordnete Plasma-Manipulator 4 mit dem Beobachtungsstutzen 3. Anschlüsse für eine Wasserkühlung am Manipulator 4 sind der Übersichtlichkeit halber weggelassen. Das elektrische Potential des Plasma-Manipulators 4 relativ zur Anregungsspule wird mit der Spannungsquelle U empirisch optimiert.

Das oberhalb des Brennerrohres 1 befindliche Plasma wird durch den konischen Plasma-Manipulator 4 in einen zentralen Strahl 6 entlang der Plasmaachse 7 und einen abgelenkten Strahl 5 aufgeteilt. Der zentrale Strahl 6 hat entsprechend der Blendenöffnung des Plasma-Manipulators 4 einen ungefähren Durchmesser zwischen 2 und 6 mm.

Die Emissionsstrahlung des zentralen Strahls 6 gelangt über den Beobachtungsstutzen 3 in ein optisches Spektrometer, welches der Übersichtlichkeit halber weggelassen ist. Für Messungen im ultravioletten Spektralbereich ist es zweckmäßig, den Beobachtungsstutzen 3 vom Spektrometer her mit dem Plasmaträgergas zu spülen.

Die zentrale Bohrung des Plasma-Manipulators wird derart gewählt, daß entsprechend den Abmessungen des ICP-Brenners der die nachzuweisenden Atome enthaltende zentrale Bereich des Plasmas hindurchgelassen und der äußere ringförmige Bereich höherer Temperatur und stärkerer Untergrundemission von der Beobachtungszone ferngehalten wird. Dadurch wird S/N dieser Anordnung im Vergleich zur üblichen freien Plasmafackel erhöht.

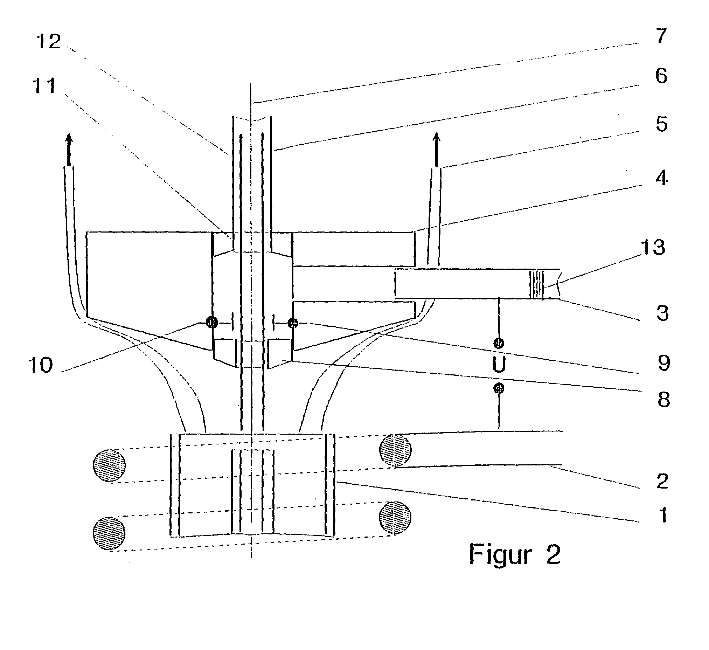

Figur 2 zeigt eine zweite Variante des Plasma-Manipulators. Das Beobachtungvolumen im Plasma-Manipulator 4 ist hier gegenüber der Eintrittsblende 8 erweitert und ermöglicht das Einbringen von Ablenkelektroden 9 und 10. Letztere können, wie in Figur 2 dargestellt, sowohl unmittelbar vor dem Beobachtungsvolumen als auch seitlich von diesem angebracht werden. Eine an die Elektroden 9 und 10 angelegte Spannung entzieht dem Plasmastrahl Ladungsträger und vermindert dadurch die Untergrundemission, während die Atomemission zunächst ungeändert bleibt. Die Austrittsblende 11 verhindert das Eindringen von Atmosphärenbestandteilen in die Beobachtungszone. In diese Blende kann auch ein Stutzen 12 zum Anschluß einer Pumpe eingesetzt werden. In diesem Falle wird der Beobachtungsstutzen 3 zweckmäßigerweise mit einem optischen Fenster 13 gasdicht gegenüber dem Spektrometer abgeschlossen.

Der Anschluß einer Pumpe am Stutzen 3 erzeugt einen Unterdruck im Plasma-Manipulator und durch den mithin erhöhten Durchsatz des zentralen Plasmastrahls eine Erhöhung des Emissionssignals.

Für die Wahl des Durchmessers der Eintrittsblende 8 gelten die gleichen Kriterien wie für Figur 1 bereits erläutert. Eine Erweiterung des Beobachtungsvolumens im Ausführungsbeispiel nach Figur 2 bewirkt eine geringere Kühlung des zentralen Plasmastrahls 6 und somit eine gleichmäßigere Emission.

Statt oder zusätzlich zu den Elektroden 9, 10 kann an dieser Stelle oder in Strömungsrichtung dahinter auch ein Mittel zum Erzeugen eines Magnetfeldes insbeondere eine Spule befestigt sein. Vorzugsweise ist die Spule auf einem Magnetkern (Joch) angeordnet, wobei die Spule außerhalb des Plasma-Manipulators liegt.

In einer nicht dargestellten Ausführungsform der Vorrichtung ist in allen drei Ausführungsbeispielen die Druckseite der Pumpe in das Analyse-Plasma zurückgeführt, insbesondere in den Kühlgasstrom.

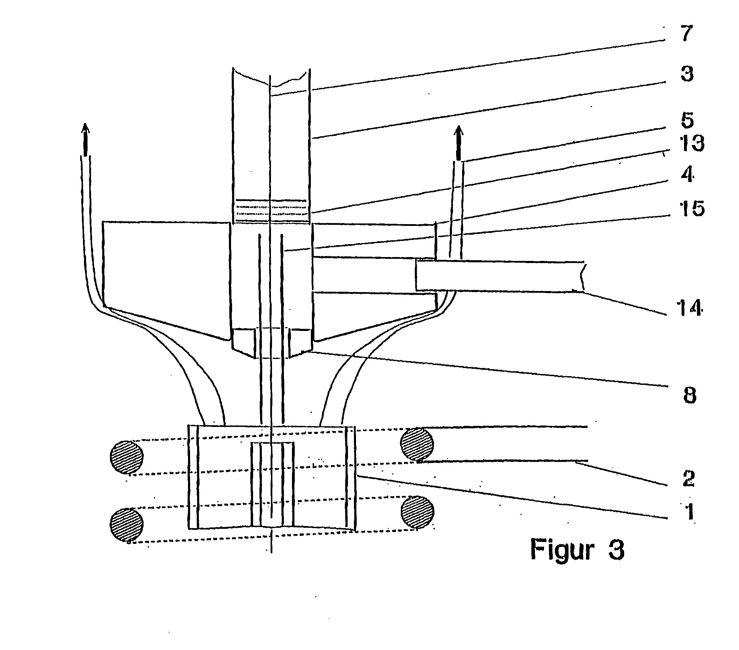

Eine weitere Variante der Erfindung ist in Figur 3 dargestellt. Hierbei fällt die Achse des Beobachtungsstutzens 3 mit der Achse 7 des Analyse-Plasmas zusammen. Zwischen Plasma-Manipulator 4 und Beobachtungseinrichtung 3 (Beobachtungsstutzen) befindet sich ein optisches Fenster 13, welches die Beobachtungseinrichtung 3 gasdicht abschließt. Anstelle des Fensters 13 kann auch ein Abbildungsobjektiv Verwendung finden, um die Lichtüberführung von der gekühlten Blende ins Spektrometer zu optimieren. Am Plasma-Manipulator 4 ist seitlich eine Spülgaszuführung 14 vorhanden, so daß das aus der Blende 8 austretende Spülgas ein Eindringen des zentralen Teils des Analyse-Plasmas verhindert. Das zentrale Bündel 15 der optischen Emission des Plasmas gelangt in die Beobachtungsvorrichtung.

Damit wird in den Plasma-Manipulator 4 nur die optische Emission aus dem zentralen Teil des Analyse-Plasmas eingelassen, insbesondere auch der ultraviolette Bereich.

Die Variante nach Figur 3 stellt eine einfach zu realisierende Anordnung dar, welche sich zugleich besonders für Matrix-behaftete Proben eignet, da keine Plasmabestandteile auf die Blende 8 oder in den Plasma-Manipulator 4 gelangen können. Auch in diesem Falle ist die oben erwähnte Rückführung eines Teils des Plasmagases zweckmäßig, indem über eine zur Blende 8 konzentrische Nut und eine separate Bohrung im Plasma-Manipulator 4 das Gas mittels Pumpe abgesaugt und dem Plasmabrenner 1 zugeführt wird. Zur besseren Übersichtlichkeit ist dieser Teil der Vorrichtung in Figur 3 weggelassen worden.

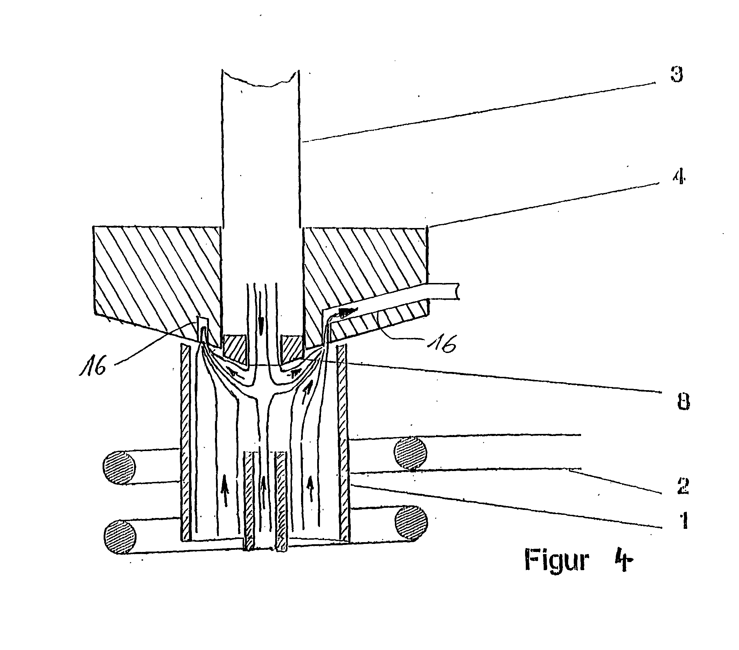

In der Figur 4 ist eine weitere Ausführungsform des erfindungsgemäßen Plasmamanipulators gezeigt.

Bei dieser Ausführungsform ist das ICP-Brennerrohr 1 bis an den Plasmamanipulator 4 herangeführt, kann beispielsweise auch direkt am Plasmamanipulator 4 anliegen. Durch den Stutzen 3 strömt ein Inertgas, beispielsweise Argon, der in Figur 4 von unten nach oben strömenden Plasmafackel entgegen. Der Inertgasstrom tritt durch die Öffnung der Blende 8 nach außen und trifft dort konzentrisch auf den Trägergasstrom der Plasmafackel. In dem Bereich, in dem die Gasströme aufeinandertreffen, wird die Plasmafackel trichterförmig auseinandergedrückt und tritt in eine ringspaltförmige Absaugvorrichtung 16 ein. Durch den Ringspalt wird sowohl das Inertgas als auch das Trägergas der Plasmafackel sowie die Aerosolreste abgesaugt. Das abgekühlte Gas kann dann gereinigt und erneut als Trägergas verwendet werden. Weil das ICP-Brennerrohr 1 die Blende 8 und den Ringspalt 16 im wesentlichen umschließt, kann die Plasmaflamme praktisch nicht mehr mit der Umgebungsatmosphäre in Kontakt treten, so daß hier störende Interferenzen ausgeschlossen sind.

Die thermische Energie der Plasmafackel wird vorzugsweise durch eine Wasserkühlung des Plasmamanipulators 4 abgeführt.

Besonders gute Beobachtungsverhältnisse des zu betrachtenden Teils der Plasmafackel sind mit dieser Konfiguration möglich. So kann der Spektrometereingang in der Achse der Plasmafackel, d. h., zentrisch im Stutzen 3 angeordnet sein. Damit ist eine sogenannte end-on Betrachtungsstellung des zentralen Teils des ICP-Plasmas möglich. Eine besonders gute Selektivität für die einzelnen zu betrachtenden Elemente ergibt sich dadurch, daß durch den Gegenstrom, der aus der Blende 8 austritt, die Länge der Plasmafackel, genauer gesagt, des zentralen Teils der Plasmafackel eingestellt werden kann und so nur derjenige Teil der Plasmafackel betrachtet wird, der die interessierenden Emissionen enthält.

Beispielsweise kann zur Untersuchung von Cadmium die Plasmafackel sehr kurz gehalten werden, so daß nur der heißere Teil analysiert wird, während zur Analyse von Natrium die Plasmafackel länger gehalten werden kann, so daß die kühleren Bereiche mit den Natriumemissionslinien optisch betrachtet werden können.

## Patentansprüche

1. Vorrichtung für die Emissionsspektralanalyse mit einem die Analysenprobe enthaltenden Analyse-Plasma und einem für Emissionsmessungen geeigneten Spektrometer, **dadurch gekennzeichnet, daß** ein Plasma-Manipulator (4) vorhanden ist, mit einer gekühlten Blende (8) konzentrisch zur Achse (7) und senkrecht zur Ausbreitungsrichtung des Plasmas mit einem gegen den Plasmadurchmesser kleineren freien Durchmesser, welcher nur den zentralen Teil (6) oder nur den optischen Teil des Analyse-Plasmas hindurchläßt und den übrigen Bereich ausblendet, sowie einer Beobachtungseinrichtung (3) für die Strahlungsemission des hindurchgelassenen Plasmavolumens.

2. Vorrichtung nach Anspruch 1, **dadurch gekennzeichnet , daß** die Beobachtungseinrichtung (3) unter einem Beobachtungswinkel zwischen 10 und 170 Grad vorzugsweise zwischen 45 und 135 gegen die Ausbreitungsachse des Plasmas angeordnet ist.

3. Vorrichtung nach Anspruch 1, **dadurch gekennzeichnet, daß** die Achse der Beobachtungseinrichtung (3) insbesondere eines Beobachtungsstutzens mit der Achse (7) des zentralen hindurchgelassenen Analyse-Plasmas bzw. optischen Teils zusammenfällt.

4. Vorrichtung für die Emissionsspektralanalyse nach einem der vorherigen Ansprüche, **dadurch gekennzeichnet , daß** eine variable Spannungsquelle (U) zwischen Anlayse-Plasmaerzeuger (1, 2) und gekühlter Blende angeordnet ist.

5. Vorrichtung für die Emissionsspektralanalyse nach einem der vorherigen Ansprüche, **dadurch gekennzeichnet, daß** am Plasma-Manipulator (4) die Blende (8) mit einer ihrem Durchmesser vergleichbaren Dicke vorhanden ist und das Beobachtungsvolumen einen größeren Durchmesser als die Blende besitzt.

6. Vorrichtung für die Emissionsspektralanalyse nach einem der vorherigen Ansprüche, **dadurch gekennzeichnet, daß** zwischen der Blende (8) und Beobachtungsvolumen, insbesondere im Bereich des Beobachtungsvolumens Elektroden (9, 10) als ein Mittel zum Erzeugen eines elektrischen und/oder magnetischen Feldes, insbesondere eine Spule, in dem an den ausgeblendeten Plasmastrahl (6) angrenzenden Raumbereich vorhanden ist (sind).

7. Vorrichtung für die Emissionsspektralanalyse nach einem der vorherigen Ansprüche, **dadurch gekennzeichnet, daß** die Elektroden (9, 10) oder die Mittel mit einer Wechselspannung beaufschlagt sind und der Signalnachweis im Spektrometer synchron mit der Phase der Wechselspannung erfolgt.

8. Vorrichtung für die Emissionsspektralanalyse nach einem der vorherigen Ansprüche, **dadurch gekennzeichnet, daß** der Plasma-Manipulator (4) am Austrittsort des zentralen Plasmastrahls (6) eine Blende mit einem Rohrstutzen (12) zum Anschluß einer Pumpe aufweist und der Beobachtungsstutzen (3) durch ein optisches Fenster (13) gasdicht verschlossen ist.

9. Vorrichtung für die Emissionsspektralanalyse nach Anspruch 6, **dadurch gekennzeichnet, daß** die Ansaugseite einer Pumpe mit dem Rohrstutzen (12) verbunden ist, und **daß** die Druckseite der Pumpe in das Analyse-Plasma zurückgeführt wird, insbesondere in den Kühlgasstrom.

10. Vorrichtung für die Emissionsspektralanalyse nach einem der vorherigen Ansprüche, **dadurch gekennzeichnet, daß** der Plasma-Manipulator (4) ein aus Metall gefertigter, von Kühlwasser durchflossener Hohlkörper ist und **daß** die Blenden (8, 11) vorzugsweise aus Graphit gefertigt und eingepreßt oder eingeschraubt sind.

11. Vorrichtung für die Emissionsspektralanalyse nach einem der vorherigen Ansprüche, **dadurch gekennzeichnet, daß** der Beobachtungstutzen (3) mit einem Spülgasanschluß, vorzugsweise für das Trägergas des Analysen-Plasmas, versehen ist und durch ein optisches Fenster (13) gasdicht abgeschlossen ist.

12. Vorrichtung für die Emissionsspektralanalyse nach einem der vorherigen Ansprüche, **dadurch gekennzeichnet, daß** ein oder mehrere Beobachtungsstutzen (3) um das Beobachtungsvolumen angeordnet sind und mindestens einer davon einen optischen Wellenleiter enthält.

13. Vorrichtung für die Emissionsspektralanalyse nach einem der vorherigen Ansprüche, **dadurch gekennzeichnet, daß** innerhalb des Plasma-Manipulators 4 eine mit dem Beobachtungsstutzen 3 fluchtende Bohrung vorhanden ist, welche einen Hohlspiegel enthält, dessen Achse innerhalb des Beobachtungsstutzens (3) verläuft.

14. Vorrichtung für die Emissionsspektralanalyse nach einem der vorherigen Ansprüche, **dadurch gekennzeichnet, daß** am Plasma-Manipulator (4) die Blende (8), ein gasdichtes optisches Fenster (13) zwischen der Blende (8) und Beobachtungseinrichtung (3), sowie eine Spülgaszuführung (14) zum Volumen zwischen der Blende (8) und optischem Fenster (13) vorhanden sind, so **daß** das Spülgas aus der Blende (8) in Richfung Analyse-Plasma austritt.

15. Vorrichtung für die Emissionsspektralanalyse nach einem der vorherigen Ansprüche, **dadurch gekennzeichnet, daß** in der Umgebung der gekühlten Blende (8) Bohrungen im Plasma-Manipulator (4) vorhanden sind, welche mit der Saugseite einer Pumpe verbunden sind, und **daß** die Druckseite der Pumpe in das Analyse-Plasma oder in den Kühlgasstrom zurückgeführt wird.

16. Vorrichtung für die Emissionsspektralanalyse nach Anspruch 15, **dadurch gekennzeichnet, daß** das äußere Führungsrohr für das Plasmagas 1 im wesentlichen dicht mit dem Plasma-Manipulator 4 außerhalb der Bohrungen zur Plasmagas-Absaugung 16 verbunden ist.

## Claims

1. Device for emission spectrum analysis having an analysis plasma containing the sample for analysis and a spectrometer suitable for emission measurements, **characterised in that** a plasma manipulator (4) is present having a cooled diaphragm (8) which is concentric with the axis (7) of the plasma and perpendicular to the direction of propagation thereof and whose clear diameter, which is smaller than the diameter of the plasma, allows only the central part (6) or only the optical part of the analysis plasma to pass through and masks off the remaining region, and having a viewing means (3) for the radiant emission from the volume of plasma which is allowed to pass through.

2. Device according to claim 1, **characterised in that** the viewing means (3) is arranged at a viewing angle of between 10 and 170 degrees and preferably between 45 and 135 degrees to the axis of propagation of the plasma.

3. Device according to claim 1, **characterised in that** the axis of the viewing means (3) and particularly of a viewing spigot coincides with the axis (7) of the central analysis plasma or optical part which is allowed to pass through.

4. Device for emission spectrum analysis according to any of the foregoing claims, **characterised in that** a variable voltage source (U) is arranged between the analysis plasma generator (1,2) and the cooled diaphragm.

5. Device for emission spectrum analysis according to any of the foregoing claims, **characterised in that** the diameter of the diaphragm (8) present at the plasma manipulator (4) is comparable to its thickness and the diameter of the viewing space is larger than that of the diaphragm.

6. Device for emission spectrum analysis according to any of the foregoing claims, **characterised in that** between the diaphragm (8) and the viewing space and particularly in the region of the viewing space, there are (is) present in the area of space adjacent to the selected-out stream of plasma (6) electrodes (9, 10) and particularly a coil to act as a means of generating an electrical and/or magnetic field.

7. Device for emission spectrum analysis according to any of the foregoing claims, **characterised in that** an AC voltage is applied to the electrodes (9, 10) or the means and the signal detection in the spectrometer takes place synchronously with the phase of the AC voltage.

8. Device for emission spectrum analysis according to any of the foregoing claims, **characterised in that** the plasma manipulator (4) has a diaphragm having a tubular spigot (12) for connecting a pump at the exit point of the central stream of plasma (6) and the viewing spigot (3) is closed off with a gas-tight seal by an optical window (13).

9. Device for emission spectrum analysis according to claim 6, **characterised in that** the intake end of a pump is connected to the tubular spigot (12) and **in that** the delivery end of the pump is fed back into the analysis plasma and particularly into the flow of cooling gas.

10. Device for emission spectrum analysis according to any of the foregoing claims, **characterised in that** the plasma manipulator (4) is a hollow body made of metal through which cooling water flows and **in that** the diaphragms (8, 11) are preferably made of graphite and are pressed or screwed into place.

11. Device for emission spectrum analysis according to any of the foregoing claims, **characterised in that** the viewing spigot (3) is provided with a connection for scavenging gas, preferably the carrier gas for the analysis plasma, and is closed off with a gas-tight seal by an optical window (13).

12. Device for emission spectrum analysis according to any of the foregoing claims, **characterised in that** one or more viewing spigots (3) are arranged around the viewing space and at least one of them contains an optical wave-guide.

13. Device for emission spectrum analysis according to any of the foregoing claims, **characterised in that** present in the plasma manipulator (4) is a bore which lines up with the viewing spigot (3) and which contains a concentrating reflector whose axis extends within the viewing spigot (3).

14. Device for emission spectrum analysis according to any of the foregoing claims, **characterised in that** present in the plasma manipulator (4) are the diaphragm (8), a gas-tight optical window (13) between the diaphragm (8) and the viewing means (3) and an infeed (14) for scavenging gas into the space between the diaphragm (8) and the optical window (13), so that the scavenging gas emerges from the diaphragm (8) in the direction of the analysis plasma.

15. Device for emission spectrum analysis according to any of the foregoing claims, **characterised in that** present in the area surrounding the cooled diaphragm (8) are bores in the plasma manipulator (4) which are connected to the intake end of a pump and **in that** the delivery end of the pump is fed back into the analysis plasma or into the flow of coolant gas.

16. Device for emission spectrum analysis according to claim 15, **characterised in that** the outer guide tube for the plasma gas (1) is connected to the plasma manipulator (4), in such a way as to be substantially sealed, outside the bores (16) for extracting plasma gas.

## Revendications

1. Dispositif pour l'analyse spectrale d'émissions, comportant un plasma d'analyse contenant l'échantillon à analyser et un spectromètre approprié pour des mesures d'émission, **caractérisé en ce qu'**il est prévu un manipulateur à plasma (4), comportant un diaphragme refroidi (8) concentriquement à l'axe (7) et perpendiculairement à la direction de propagation du plasma et présentant un diamètre libre inférieur au diamètre du plasma, qui ne laisse traverser que la partie centrale (6) ou que la partie optique du plasma d'analyse et qui occulte la zone restante, et un dispositif d'observation (3) pour l'émission de rayonnement du volume de plasma ayant traversé.

2. Dispositif selon la revendication 1, **caractérisé en ce que** le dispositif d'observation (3) est agencé sous un angle d'observation compris entre 10 et 170°, de préférence entre 45 et 135° par rapport à l'axe de propagation du plasma.

3. Dispositif selon la revendication 1, **caractérisé en ce que** l'axe du dispositif d'observation (3) en particulier d'un manchon d'observation coïncide avec l'axe (7) du plasma d'analyse central ayant traversé ou de la partie optique.

4. Dispositif pour l'analyse spectrale d'émission selon l'une quelconque des revendications précédentes, **caractérisé en ce qu'**une source de tension variable (U) est agencée entre le générateur de plasma d'analyse (1, 2) et le diaphragme refroidi.

5. Dispositif pour l'analyse spectrale d'émission selon l'une quelconque des revendications précédentes, **caractérisé en ce que** sur le manipulateur à plasma (4) est prévu le diaphragme (8) avec une épaisseur comparable à son diamètre, et **en ce que** le volume d'observation présente un diamètre supérieur à celui du diaphragme.

6. Dispositif pour l'analyse spectrale d'émission selon l'une quelconque des revendications précédentes, **caractérisé en ce qu'**il est prévu, entre le diaphragme (8) et le volume d'observation, en particulier au niveau du volume d'observation, des électrodes (9, 10) à titre de moyen pour générer un champ électrique et/ou magnétique, en particulier une bobine, dans l'espace adjacent au rayonnement de plasma occulté (6).

7. Dispositif pour l'analyse spectrale d'émission selon l'une quelconque des revendications précédentes, **caractérisé en ce que** les électrodes (9, 10) ou les moyens sont alimenté(e)s en une tension alternative, et **en ce que** la preuve du signal dans le spectromètre s'effectue de façon synchrone avec la phase de la tension alternative.

8. Dispositif pour l'analyse spectrale d'émission selon l'une quelconque des revendications précédentes, **caractérisé en ce que** le manipulateur à plasma (4) comprend, à l'emplacement de sortie du rayonnement de plasma central (6), un diaphragme avec un manchon tubulaire (12) pour brancher une pompe, et **en ce que** le manchon d'observation (3) est refermé de façon étanche aux gaz par une fenêtre optique (13).

9. Dispositif pour l'analyse spectrale d'émission selon la revendication 6, **caractérisé en ce que** le côté aspiration de la pompe est relié au manchon tubulaire (12), et **en ce que** le côté pression de la pompe est ramené dans le plasma d'analyse, en particulier dans le courant de gaz de refroidissement.

10. Dispositif pour l'analyse spectrale d'émission selon l'une quelconque des revendications précédentes, **caractérisé en ce que** le manipulateur à plasma (4) est un corps creux fabriqué en métal et traversé par de l'eau de refroidissement, et **en ce que** les diaphragmes (8, 11) sont fabriqués de préférence en graphite et sont enfoncés à la presse ou vissés.

11. Dispositif pour l'analyse spectrale d'émission selon l'une quelconque des revendications précédentes, **caractérisé en ce que** le manchon d'observation (3) est pourvu d'un raccord à gaz de rinçage, de préférence pour le gaz porteur du plasma d'analyse, et est refermé de façon étanche aux gaz par une fenêtre optique (13).

12. Dispositif pour l'analyse spectrale d'émission selon l'une quelconque des revendications précédentes, **caractérisé en ce qu'**un ou plusieurs manchons d'observation (3) sont agencés autour du volume d'observation, et **en ce que** l'un au moins comprend un guide d'ondes optiques.

13. Dispositif pour l'analyse spectrale d'émission selon l'une quelconque des revendications précédentes, **caractérisé en ce qu'**il est prévu à l'intérieur du manipulateur à plasma (4) un perçage en alignement avec le manchon d'observation (3), perçage qui comprend un miroir concave dont l'axe s'étend à l'intérieur du manchon d'observation (3).

14. Dispositif pour l'analyse spectrale d'émission selon l'une quelconque des revendications précédentes, **caractérisé en ce que** sur le manipulateur à plasma (4) sont prévus le diaphragme (8), une fenêtre optique (13) étanche aux gaz entre le diaphragme (8) et le dispositif d'observation (3), ainsi qu'une conduite d'amenée de gaz de rinçage (14) vers le volume entre le diaphragme (8) et la fenêtre optique (13), de sorte que le gaz de rinçage sort hors du diaphragme (8) en direction du plasma d'analyse.

15. Dispositif pour l'analyse spectrale d'émission selon l'une quelconque des revendications précédentes, **caractérisé en ce qu'**il est prévu, aux alentours du diaphragme refroidi (8), des perçages dans le manipulateur à plasma (4), qui sont reliés au côté aspiration d'une pompe, et **en ce que** le côté pression de la pompe est ramené dans le plasma d'analyse ou dans le courant de gaz de refroidissement.

16. Dispositif pour l'analyse spectrale d'émission selon la revendication 15, **caractérisé en ce que** le tube de guidage extérieur pour le gaz de plasma (1) est relié de façon sensiblement étanche au manipulateur à plasma (4) à l'extérieur des perçages pour la conduite d'aspiration de gaz de plasma (16).
